# EUROPÄISCHE PATENTSCHRIFT

(11) **EP 1 086 780 B1**
(45) Veröffentlichungstag und Bekanntmachung des Hinweises auf die Patenterteilung: **26.02.2003**
(21) Anmeldenummer: 00117874.8
(22) Anmeldetag: 19.08.2000
(51) Int. Cl.: B23P 19/00, B65G 47/14, B65D 88/68

(54) **Verfahren und Vorrichtung zur Vereinzelung von ring-oder scheibenförmigen Bauteilen**
Method and device for separating ring- or disc-shaped articles
Procédé et dispositif pour séparer d' articles en forme d'anneau ou de disque

(30) Priorität: 21.09.1999 DE 19945237
(43) Veröffentlichungstag der Anmeldung: 28.03.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: Mohaupt, Matthias, Dipl.-Ing., 07778 Altengönna (DE)

(56) Entgegenhaltungen:
- EP-A- 0 572 861
- US-A- 3 876 063
- US-A- 4 063 633
- PATENT ABSTRACTS OF JAPAN vol. 1998, no. 03, 27. Februar 1998 (1998-02-27) -& JP 09 290911 A (KEIHIN SEIKI MFG CO LTD), 11. November 1997 (1997-11-11)

## Beschreibung

Die Erfindung betrifft ein Verfahren zur Vereinzelung von ring- oder scheibenförmigen Bauteilen, insbesondere von O-Ringen. Die Erfindung bezieht sich ferner auf eine Vorrichtung zur Durchführung eines derartigen Verfahrens.

Aus DE 42 17 946 A1 ist eine Vorrichtung zum Vereinzeln und Fördern von ringförmigen Werkstücken, insbesondere elastischen Ringen wie Dichtungen, bekannt. Diese Vorrichtung umfaßt eine Aufnahmestation mit einer rotierend antreibbaren Vorratstrommel, an die sich eine Austragskammer mit einem Führungsschlitz in deren Rückwand anschließt. Durch diesen Führungsschlitz werden von einer Schleppkette abstehende Mitnehmerstifte hindurchgeführt, an deren Spitzen zunächst ein oder mehrere ringförmige Werkstücke hängen bleiben. Beim sich anschließenden Überfahren einer Abstreiframpe bleibt auf der Spitze eines jeden Mitnehmerstiftes nur noch Platz für einen einzelnen Ring. Dieser wird durch die Schleppkettenbahn weitergefördert und beim Passieren von ein oder mehreren Kontrollstationen nur dann bis zu einer Abgabestation mitgenommen, wenn er einzeln und in richtiger Lage transportiert wird. Nachteilig ist bei dieser Vorrichtung ihr vergleichsweise komplizierter Aufbau.

Zum Vereinzeln von als Schüttgut vorliegenden Bauteilen bzw. Werkstücken ist es auch allgemein bekannt, sogenannte Vibrationswendelförderer einzusetzen. Eine auf diesem Prinzip arbeitende Vorrichtung zur Vereinzelung von ringartigen Werkstücken ist beispielsweise aus DE 44 06 587 A1 bekannt.
Für die Montage von O-Ringen wurden ferner Vereinzelungs- und Zuführsysteme entwickelt, die der unmittelbaren menschlichen Handhabung nachempfunden sind, indem zum Beispiel Roboterfinger in den Vorratsbehälter in das Schüttgut greifen, überzählige O-Ringe abgestreift werden und dann der einzelne O-Ring einem Montageautomaten übergeben wird. Ein Werkzeug zur Montage von O-Ringen ist in DE 40 36 863 A1 beschrieben.

Derartige Vorrichtungen bzw. Systeme sind sehr aufwendig und damit kostspielig. Außerdem sind sie oft nicht oder nur bedingt zur Vereinzelung von klebrigen bzw. sehr stark aneinanderhaftenden ringförmigen Bauteilen geeignet.

Es ist daher Aufgabe der Erfindung, ein Verfahren und eine Vorrichtung zu schaffen, mit dem bzw. mit der es gelingt, mit vergleichsweise geringem Aufwand als Schüttgut vorliegende ring- oder scheibenförmige Bauteile, insbesondere O-Ringe, sicher zu vereinzeln und zwar auch dann, wenn sich im Schüttgut eine Reihe zwei- oder auch mehrfach sehr stark aneinanderhaftender derartiger Bauteile befindet. Außerdem soll das Verfahren und die Vorrichtung auch unter Bedingungen der sogenannten Good Manufacturing Practice (GMP) und unter Reinraumbedingungen funktionieren.

Die vorgenannte Aufgabe wird erfindungsgemäß mit einem Verfahren gelöst wie es im Anspruch 1 definiert ist. Vorteilhafte Weiterbildungen des erfindungsgemäßen Verfahrens sind Gegenstand der abhängigen Ansprüche 2 und 3.

Die vorgenannte Aufgabe wird ferner erfindungsgemäß mit einer Vorrichtung gemäß Anspruch 4 gelöst. Vorteilhafte Ausführungsformen der erfindungsgemäßen Vorrichtung sind Gegenstand der Unteransprüche 5 bis 8.

Die Erfindung wird nachstehend anhand eines Ausführungsbeispiels und einer zugehörigen Zeichnung näher erläutert.

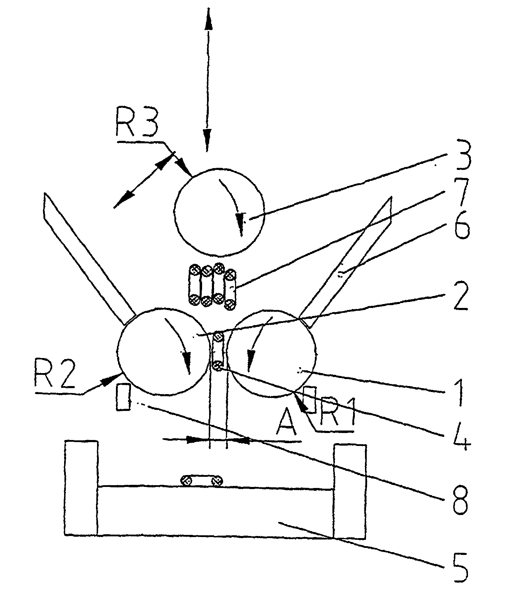

Die Zeichnung zeigt in einer schematischen Darstellung eine erfindungsgemäße Vorrichtung zur Vereinzelung von O-Ringen.

Die Vorrichtung weist zwei einen Spalt der Breite A freilassende, zueinander achsparallel angeordnete Walzen 1 und 2 sowie einen in der Zeichnung nicht dargestellten Antrieb zur Erzeugung einer gegenläufigen Drehbewegung dieser Walzen 1 und 2 auf. Über den mit ihren Achsen in einer horizontalen Ebene liegenden Walzen 1 und 2 befindet sich eine dritte Walze 3, die von einer oberen in eine untere Stellung absenkbar ist und die mit einem Antrieb zur Erzeugung einer Drehbewegung sowie einer der Drehbewegung überlagerten, in axialer Richtung wirkenden, sinusförmigen Bewegung gekoppelt ist. Die Breite A des Spaltes zwischen den Walzen 1 und 2 ist geringfügig größer als die Dicke eines einzelnen O-Ringes 4 gewählt. Unterhalb der Walzen 1 und 2 ist ein Förderband 5 plaziert. Die Vorrichtung umfaßt ferner einen oberhalb der Walzen 1 und 2 angeordneten Fülltrichter 6 mit zwei gegenüber-liegenden, jeweils in Bezug zur Lotrechten geneigten, auf die Achse der Walze 1 bzw. die Achse der Walze 2 zulaufenden Seitenwänden. Vom Fülltrichter 6 werden die als Schüttgut 7 vorliegenden O-Ringe 4 aufgenommen. Komplettiert wird die Vorrichtung von je einem der Walze 1 sowie der Walze 2 zugeordneten Abstreifer 8.

Die Vorrichtung arbeitet wie folgt:
Während sich die Walze 3 in ihrer oberen Stellung befindet, werden die O-Ringe 4 in den Fülltrichter 6 auf die gegenläufige rotierenden Walzen 1 und 2 geschüttet. Bereits einzeln vorliegende und mit einer der beiden rotierenden Walzen 1 bzw. 2 in Berührung kommende O-Ringe 4 werden sodann in Richtung Spalt bewegt und fallen durch diesen hindurch auf das darunter angeordnete Förderband 5. Zum Vereinzeln von im Schüttgut 7 vorliegenden aneinanderhaftenden O-Ringen 4 wird die rotierende Walze 3 von ihrer oberen Stellung im Bereich des Fülltrichters 6 in eine untere Stellung in das Schüttgut 7 bewegt. Diese Walze 3 vollführt dazu zur Drehbewegung eine zusätzliche sinusförmige Bewegung in axialer Richtung, so daß beim Aufsetzen der Walze 3 auf aneinanderhaftende O-Ringe 4 diese voneinander abgestreift und schließlich mit Hilfe der Walzen 1 und 2 gleichfalls einzeln durch den Spalt gefördert werden, wo sie letztlich auf das Förderband 5 fallen und abtransportiert werden. Es hat sich als vorteilhaft herausgestellt, wenn die Walze 3 periodisch, zum Beispiel in Abständen von 10 bis 30 Sekunden, von ihrer unteren in die obere Stellung, d. h. die Beladeposition, bewegt und dann erneut abgesenkt wird. Durch diese Maßnahme wird garantiert, daß alle im Fülltrichter 6 befindlichen O-Ringe 4 vereinzelt auf das Förderband befördert werden und nicht etwa aneinanderhaftende O-Ringe 4 im Fülltrichter 6 zurückbleiben, wenn sich die Walze 3 in ihre untere Stellung durch das Schüttgut 7 durchgearbeitet hat und in dieser Stellung verbliebe. Die Abstreifer 8 sorgen dafür, daß die den Spalt zwischen den Walzen 1 und 2 passierenden und gegebenenfalls an einer der Walzen 1 oder 2 haftenden O-Ringe 4 abgestreift werden und gleichfalls auf das Förderband 5 fallen.

Es versteht sich, daß es im Rahmen der Erfindung liegt, daß die beschriebene Vorrichtung nicht nur zum Vereinzeln von O-Ringen, sondern auch von anderen ring- oder scheibenförmigen Bauteilen geeignet ist.

Die Radien R1, R2 und R3 der Walzen 1, 2 und 3 sowie die Breite A des Spaltes zwischen den Walzen 1 und 2 richten sich nach den zu vereinzelnden Bauteilgeometrien. Besonders vorteilhaft ist es, wenn die Breite A des Spaltes variabel einstellbar ist.

## Patentansprüche

1. Verfahren zur Vereinzelung von ring- oder scheibenförmigen Bauteilen, insbesondere O-Ringen, mit folgenden Verfahrensschritten :
- die als Schüttgut (7) ungeordnet vorliegenden Bauteile (4) werden über einen Fülltrichter (6) auf zwei beabstandet voneinander, einen Spalt der Breite A freilassende, achsparallel angeordnete und gegenläufig rotierende Walzen (1,2) geschüttet,
- eine dritte rotierenden Walze (3) wird von einer oberen Stellung im Bereich des Fülltrichters (6) in eine untere Stellung in das Schüttgut (7) bewegt, wobei diese dritte Walze (3) zusätzlich zur Drehbewegung eine sinusfömige Bewegung in axialer Richtung vollführt und
- die einzelnen, den Spalt zwischen den ersten beiden Walzen (1,2) passierenden Bauteile (4) fallen auf ein unter diesen beiden Walzen (1,2) angeordnetes Förderband (5).

2. Verfahren nach Anspruch 1,
**dadurch gekennzeichnet,**
**daß** die dritte Walze (3) periodisch von ihrer oberen in die untere Stellung bewegt wird.

3. Verfahren nach Anspruch 1 oder 2
**dadurch gekennzeichnet,**
**daß** die den Spalt zwischen den ersten beiden Walzen (1, 2) passierenden und gegebenenfalls an einer der Walzen (1, 2) haftenden Bauteile (3) mittels unter diesen Walzen (1, 2) angeordneten Abstreifern (8) abgestreift werden.

4. Vorrichtung zur Vereinzelung von ring- oder scheibenförmigen Bauteilen, vorzugsweise O-Ringen, insbesondere zur Durchführung des Verfahrens nach Anspruch 1, umfassend:
- eine erste und eine zweite Walze (1, 2), die achsparallel und mit ihren Achsen in einer horizontalen Ebene liegend sowie einen Spalt der Breite A freilassend beabstandet voneinander angeordnet sind,
- einen Antrieb zur Erzeugung einer gegenläufigen Drehbewegung dieser Walzen (1,2),
- einen oberhalb der Walzen (1, 2) angeordneten Fülltrichter (6) zur Aufnahme der als Schüttgut (7) vorliegenden Bauteile (4),
- eine dritte Walze (3), die von einer oberen Stellung im Bereich des Fülltrichters (6) in eine untere Stellung in das Schüttgut (7) bewegbar ist und die mit einem Antrieb zur Erzeugung einer Drehbewegung sowie einer der Drehbewegung überlagerten in axialer Richtung wirkenden sinusförmigen Bewegung gekoppelt ist, sowie
- ein unter den ersten beiden Walzen (1,2) angeordnetes Förderband (5) zur Aufnahme und zum Abtransport der durch den Spalt fallenden einzelnen Bauteile (4).

5. Vorrichtung nach Anspruch 4,
**dadurch gekennzeichnet,**
**daß** der gegenseitige Abstand der horizontal in einer Ebene liegenden Walzen (1,2) und damit die Breite A des Spaltes einstellbar ist.

6. Vorrichtung nach Anspruch 4 oder 5,
**dadurch gekennzeichnet,**
**daß** unter jeder der beiden horizontal in einer Ebene liegenden Walzen (1, 2) jeweils ein Abstreifer (8) angeordnet ist.

7. Vorrichtung nach einem der Ansprüche 4 bis 6,
**dadurch gekennzeichnet,**
**daß** der Fülltrichter (6) zwei gegenüberliegende, jeweils in Bezug zur Lotrechten geneigte, auf die Achse der ersten Walze (1) bzw. die Achse der zweiten Walze (2) zulaufende Seitenwände aufweist.

8. Vorrichtung nach einem der Ansprüche 4 bis 7,
**dadurch gekennzeichnet,**
**daß** eine Steuereinrichtung zur Erzeugung einer periodischen Auf- und Abbewegung der dritten Walze (3) vorgesehen ist.

## Claims

1. Method for separating ring- or disc-shaped structural parts, in particular O-rings, with the following steps:
- the structural parts (4) present at random as bulk material (7) are discharged via a hopper (6) onto two spaced counter-rotating rollers (1, 2) arranged axis-parallel leaving a gap with the width A,
- a third rotating roller (3) is moved into the bulk material (7) from an upper position in the region of the hopper (6) into a lower position, this third roller (3) performing a sinusoidal movement in axial direction in addition to the rotational movement, and
- the individual structural parts (4) passing through the gap between the first two rollers (1, 2) fall onto a conveyor belt (5) disposed below these two rollers (1, 2).

2. Method according to Claim 1, **characterised in that**
the third roller (3) is moved periodically from its upper position into its lower position.

3. Method according to Claim 1 or 2, **characterised in that**
the structural parts (3) passing through the gap between the first two rollers (1, 2) and possibly adhering to one of the rollers (1, 2) are scraped off by means of scrapers (8) arranged below these rollers (1, 2).

4. Device for separating ring- or disc-shaped structural parts, preferably O-rings, in particular for conducting the method according to Claim 1, comprising:
- a first and a second roller (1, 2), which are disposed axis-parallel lying with their axes in a horizontal plane and also spaced from one another leaving a gap with the width A,
- a drive for generating the contra-rotational movement of these rollers (1, 2),
- a hopper (6) disposed above the rollers (1,2) to receive the structural parts (4) present as bulk material (7),
- a third roller (3), which may be moved into the bulk material (7) from an upper position in the region of the hopper (6) into a lower position and which is coupled to a drive for generating a rotational movement as well as a sinusoidal movement superposed on the rotational movement and acting in axial direction, and also
- a conveyor belt (S) disposed below the first two rollers (1,2) for receiving and transporting the individual structural parts (4) falling through the gap.

5. Device according to Claim 4, **characterised in that**
the mutual spacing of the rollers (1, 2) lying horizontally in one plane, and thus the width A of the gap, are adjustable.

6. Device according to Claim 4 or 5, **characterised in that**
a scraper (8) is respectively arranged below each of the two rollers (1, 2) lying horizontally in one plane.

7. Device according to one of Claims 4 to 6, **characterised in that**
the hopper (6) has two opposing side walls respectively inclined relative to the perpendicular and running towards the axis of the first roller (1) and the axis of the second roller (2) respectively.

8. Device according to one of Claims 4 to 7, **characterised in that**
a control device is provided to generate a periodic upward and downward movement of the third roller (3).

## Revendications

1. Procédé pour séparer des articles en forme d'anneaux ou de disques, en particulier des joints toriques (bagues O-Ring), selon les étapes suivantes :
- les articles (4) se présentant en désordre, sous la forme d'un produit en vrac (7) s'écoulent d'une trémie de remplissage (6) sur deux cylindres (1, 2) d'axes parallèles, tournant en sens contraires en laissant entre eux une fente de largeur A,
- un troisième cylindre tournant (3) passe d'une position supérieure proche de la trémie (6) à une position inférieure où il plonge dans le produit en vrac (7), ce troisième cylindre (3) présentant, en plus de son mouvement de rotation, un mouvement de type sinusoïdal, dirigé axialement, et
- les composants individuels qui passent dans la fente entre les deux premiers cylindres (1, 2) tombent sur une bande transporteuse (5) placée en dessous de ces deux cylindres (1, 2).

2. Procédé pour séparer des articles selon la revendication 1,
**caractérisé en ce que**
le troisième cylindre (3) passe périodiquement de sa position supérieure à la position inférieure.

3. Procédé pour séparer des articles selon la revendication 1 ou 2,
**caractérisé en ce que**
les composants (3) qui sont passés à travers la fente séparant les deux premiers cylindres (1, 2), et qui éventuellement adhérent à un de ces cylindres, en sont dégagés par des racles (8) situées sous ces cylindres (1, 2).

4. Dispositif pour séparer des articles en forme d'anneaux ou de disques, notamment des bagues O-Ring, en mettant en oeuvre en particulier le procédé selon la revendication 1, comprenant :
- un premier et un deuxième cylindre (1, 2) ayant leurs axes parallèles dans un plan horizontal, avec entre eux une fente de largeur A,
- un entraînement pour faire tourner en sens contraires les cylindres (1, 2),
- une trémie de remplissage (6), disposée au-dessus des cylindres (1, 2), pour accueillir les articles (4) sous la forme d'un produit en vrac (7),
- un troisième cylindre (3) pouvant passer d'une position supérieure proche de la trémie (6) à une position inférieure dans le produit en vrac (7) et qui est accouplé à un entraînement produisant une rotation et, superposé à celle-ci, un déplacement en direction axiale, de type sinusoïdal,
- une bande transporteuse (5) disposée en dessous des deux premiers cylindres (1, 2), pour accueillir et transporter afin d'évacuer les articles individuels (4) tombant de la fente.

5. Dispositif pour séparer des articles selon la revendication 4,
**caractérisé en ce qu'**
on peut régler la distance horizontale séparant dans leur plan les axes des cylindres (1, 2) et par conséquent la largeur A de la fente.

6. Dispositif pour séparer des articles selon la revendication 4 ou 5,
**caractérisé en ce qu'**
en dessous de chacun des deux cylindres (1, 2) est montée une racle (8).

7. Dispositif pour séparer des articles selon l'une des revendications 4 à 6,
**caractérisé en ce que**
la trémie de remplissage (6) a deux parois opposées inclinées sur la verticale et dirigées vers l'axe du premier cylindre (1) et l'axe du second cylindre (2) respectivement.

8. Dispositif pour séparer des articles selon l'une des revendications 4 à 7,
**caractérisé en ce qu'**
un dispositif de commande est prévu pour produire un mouvement périodique de montée et de descente du troisième cylindre (3).
